# EUROPEAN PATENT APPLICATION

(11) **EP 4 769 768 A1**
(43) Date of publication of application: **01.07.2026**
(21) Application number: 24877575.1
(22) Date of filing: 11.10.2024
(51) Int. Cl.: H01M 50/383, H01M 50/211, H01M 50/249

(54) **BATTERY MODULE WHEREIN VENTING IS INDUCED UPWARD**

(30) Priority: 13.10.2023 KR 20230137105
(71) Applicant: LG Energy Solution, Ltd., Seoul 07335 (KR)
(72) Inventor: JUNG, Kitaek, Daejeon 34122 (KR)
(74) Representative: BCKIP Part mbB
(86) International application number: PCT/KR2024/015446
(87) International publication number: WO 2025/080040

(57) **Abstract**

The present invention provides a structure of a battery cell and a structure of a battery module including one or more battery cells, the battery cell including: a pouch accommodating an electrode assembly; an electrode lead extending from the electrode assembly and protruding through a first lengthwise end of the pouch; a shield member comprising a flame retardant material, the shield member provided at the first lengthwise end of the pouch and comprising a through-hole where the electrode lead is passed through, wherein an inner circumferential surface of the through-hole corresponds to an outer circumferential surface of the electrode lead.

## Description

### [TECHNICAL FIELD]

This application claims the benefit of priority based on Korean Patent Application No. 10-2023-0137105 filed on October 13, 2023, entire content disclosed in the document of the patent applications is included as a part of this specification.

The present invention relates to a battery module having a cell laminate in which a plurality of pouch-type battery cells are stacked capable of guiding the exhaust of gas and flame in upward direction, thereby avoiding the exhaust occurring in forward direction at the cell bank level.

### [BACKGROUND ART]

Secondary batteries, which provides ease of application depending on the product group and have electrical characteristics such as high energy density, are widely applied not only to portable devices, but also to electric vehicles or hybrid vehicles driven by an electrical driving source, and power storage devices. These secondary batteries are attracting attention as a new energy source for improving eco-friendliness and energy efficiency, not only because they have the primary advantage of being able to dramatically reduce the use of fossil fuels, but also because they do not generate any by-products due to energy use.

While small mobile devices use one or two or three battery cells per device, medium to large devices such as vehicles require high output and large capacity. Therefore, a medium to large-sized battery module in which multiple battery cells are electrically connected is used.

Since it is desirable for medium to large-sized battery modules to be manufactured in as small and light as possible, rectangular batteries and pouch-type batteries that may be stacked with high integration and have a small weight-to-capacity battery are mainly used as battery cells for medium to large-sized battery modules.

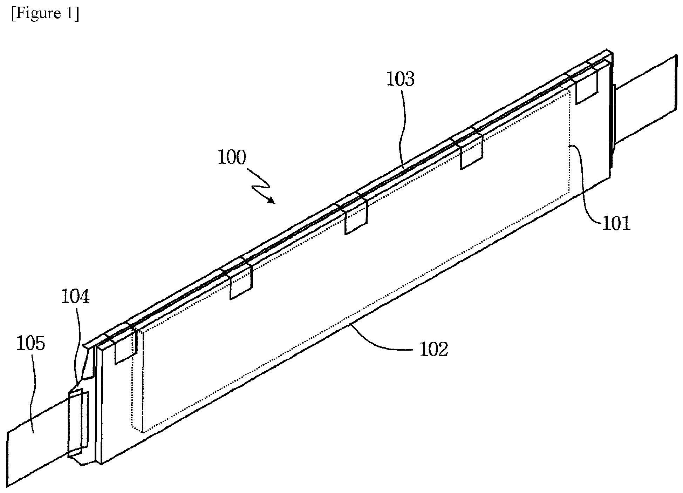

FIG. 1 illustrates a structure of a pouch-type battery cell. Referring to FIG. 1, a general pouch-type battery cell 100 has a structure wherein an electrode assembly 100 is accommodated in a pouch 102. The pouch 102 accommodates the electrode assembly 100 by folding and sealing a sheet in half and is fused and sealed at a sealed portion 103 on one heightwise end thereof and a terrace portion 104 at two lengthwise ends thereof. An electrode lead 105 extending from the electrode assembly 100 protrudes from the pouch 102 through the terrace portion 104. A plurality of battery cell 100 may be laminated to form a cell laminate for higher voltage and/or a higher capacity.

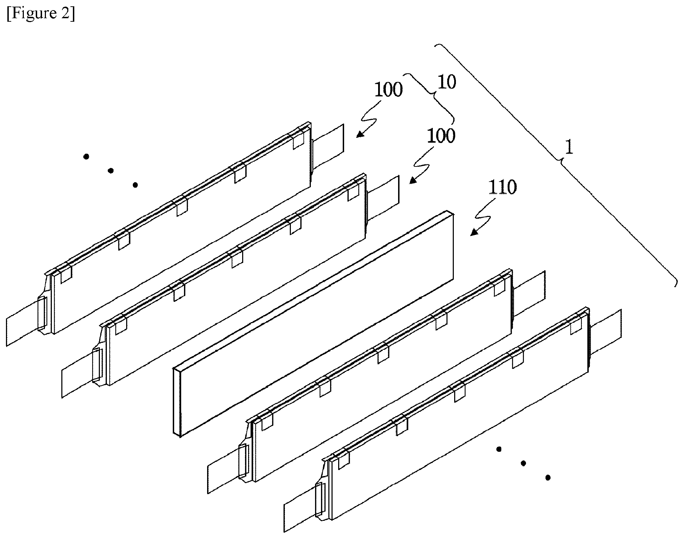

FIG. 2 illustrates the constitution of a cell laminate. Referring to FIG. 2, a plurality of battery cells 100 may be laminated in a widthwise direction to form a cell laminate 1. The cell laminate 1 may also include a barrier member 110 interposed between the battery cells 100 to prevent thermal propagation between the battery cells 100. The battery cells 100 may integrated to form one or more cell banks 10 isolated by the barrier member 110. The cell laminate 1 may be electrically connected to form a single module.

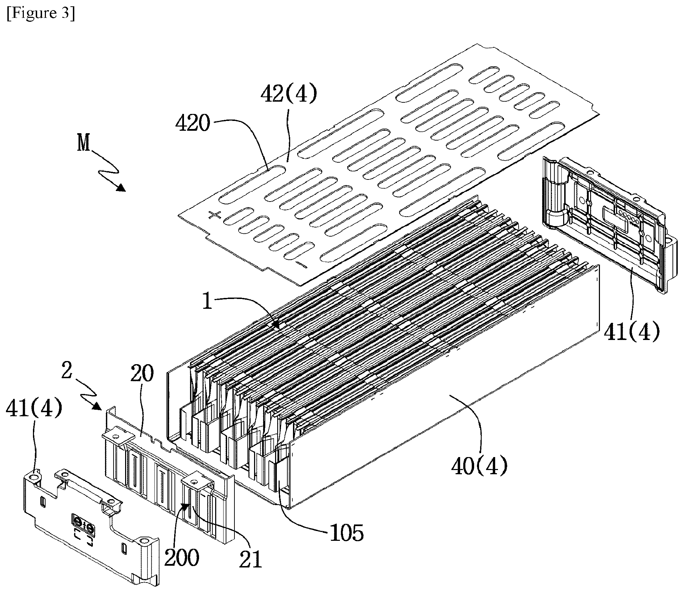

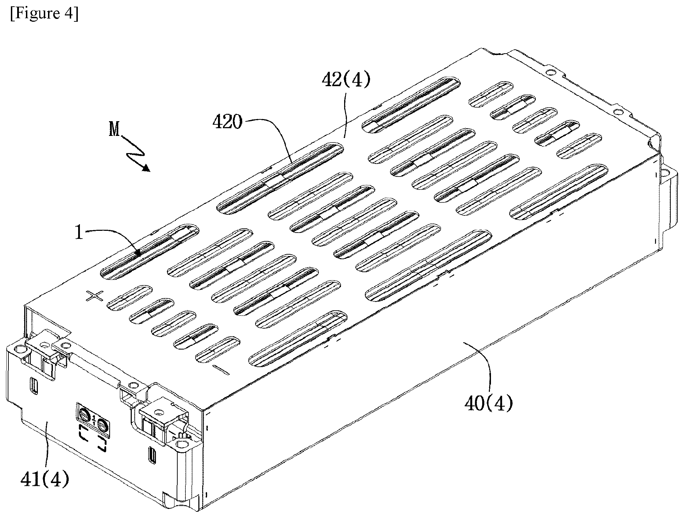

FIGS. 3 and 4 illustrate the structure of a general battery module. Referring to FIGS. 3 and 4, the battery module M may include a bus bar frame assembly 2 connected to the front portion of the cell laminate 1 to electrically connect the battery cells 100 to each other, and a housing 4 that accommodates the cell laminate 1.

Meanwhile, thermal runaway may occur in the battery cell 100 due to a short circuit or shock. The high-temperature gas and flame generated during the thermal runaway may be discharged through the upper portion, front portion and rear portion of the battery cell 100 as the fused portion of the sealed portion 103 and the terrace portion 104 melts. Here, an exhaust hole 420 may be provided in the top plate 42 of the housing 4 to discharge the gas and flame out of the housing 4.

However, when the gas and flame are discharged through the front portion of the battery module M, heat may be transmitted to other battery modules or external devices electrically connected to the battery module M. In particular, when a plurality of battery modules are integrated to form a battery pack, such thermal propagation may cause thermal runaway at the pack level. Therefore, it is necessary to prevent the gas and flame from being discharged to the front portion of the battery module M while allowing the same to be discharged smoothly in the upward direction.

In addition, the gas and flame discharged through the front portion of the battery cell 100 may cause thermal propagation between cells through the terrace portion of the adjacent battery cell even when the barrier member 110 is interposed between the battery cells 100. Accordingly, it is necessary to prevent thermal runaway at the module level by blocking thermal propagation between cells occurring before the cell laminate 1.

### [DISCLOSURE]

### [TECHNICAL PROBLEM]

In order to solve above-described problems of the prior art, it is an object of the present invention to provide a structure of a battery module capable of preventing thermal propagation between battery cells and battery modules and thermal runaway caused therefrom. In order to achieve the object, the present invention provides a structure of a battery module wherein the discharge of high-temperature gas and flame generated during ignition is guided in an upward direction.

In addition, it is an object of the present invention to provide a structure of a battery module wherein thermal propagation between cells or between cell banks through the front space of the cell laminate is blocked, thereby preventing thermal runaway in the module level.

It is an object of the present invention to provide a structure of a battery module capable of preventing the discharge of gas and flame occurring in forward direction. Specifically, it is an object of the present invention to provide a structure of a battery module capable of guiding the gas and flame through a terrace portion toward the electrode lead to be discharged in an upward direction.

It is another object of the present invention to provide a structure of a battery module capable of controlling the direction of discharge of gas and flame while maintaining the structure against high-temperature and high pressure during a thermal runaway.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve above-described technical problem, the present invention provides a structure of a battery cell comprising: a pouch accommodating an electrode assembly; an electrode lead extending from the electrode assembly and protruding through a first lengthwise end of the pouch; a housing accommodating the cell laminate and having an exhaust hole at an upper portion thereof; and a shield member comprising a flame retardant material, the shield member provided at the first lengthwise end of the pouch and comprising a through-hole where the electrode lead is passed through, wherein an inner circumferential surface of the through-hole corresponds to an outer circumferential surface of the electrode lead.

The battery cell according to the present invention includes the shield member to prevent high-temperature gas and flame caused by ignition of the battery cell from being discharged through the electrode lead toward the front portion of the battery cell. Accordingly, heat may be prevented from being transmitted to other battery modules or external devices connected to the front portion of the battery cell.

Here, the through-hole may have an inner circumferential surface that completely surrounds the outer circumferential surface of the electrode lead such that the exhaust of gas and flame through the gap between the through-hole and the electrode lead may be minimized.

The electrode lead and the through-hole may have the same height. Accordingly, the exhaust of gas and flame through the gap between the upper and lower end portions of the electrode lead and the through-hole may be minimized.

The electrode lead and the through-hole may have the same width. Accordingly, the exhaust of gas and flame through the gap between the left and right end portions of the electrode lead and the through-hole may be minimized.

The gap between the outer circumferential surface of the electrode lead and the inner circumferential surface of the through-hole may be 1 mm or less in all directions. Since the gap between the electrode lead and the through-hole has a width of 1 mm or less, the exhaust of high-temperature and high pressure gas and flame in forward direction may be delayed or prevented.

Preferably, the outer circumferential surface of the electrode lead and the inner circumferential surface of the through-hole are in contact with each other. In such case, the leakage of gas and flame between the electrode lead and the through-hole may be completely blocked.

The gap between the outer circumferential surface of the electrode lead and the inner circumferential surface of the through-hole may be sealed. It is preferable that the sealing be achieved by a sealant including a heat-resistant material. The sealant may also include a compressible material so as to seal the gap between the outer circumferential surface of the electrode lead and the inner circumferential surface of the through-hole by compression. Alternatively, the sealant may include an adhesive such as a heat-resistant synthetic resin.

The first lengthwise end of the pouch may be spaced apart from the shield member by a predetermined distance. Accordingly, gas generated inside the pouch may be discharged from the second first lengthwise end (inner side) of the shield member opposite to the first lengthwise end rather than the first lengthwise end (outer side). In addition, as a result, a free space with an open upper portion is formed between the shield member and the battery cell, gas and flame from the cell laminate may be discharged in forward direction through the open upper portion of the free space.

The shield member may include a pair of sidewall portions extending from two widthwise ends thereof toward a second lengthwise end of the pouch. The sidewall portion may form a free space having an open upper portion between the shield member and the battery cell, while preventing the exhaust of gas and flame in the widthwise direction from the free space.

The width of the shield member may be equal to or greater than that of the battery cell.

The lower end portion of the shield member may be positioned at the same height as or positioned lower than the lower end portion of a first lengthwise end surface of the battery cell.

The upper end portion of the shield member may be positioned at the same height as or positioned higher than the upper end portion of a first lengthwise end surface of the battery cell.

Preferably, the shield member covers an entirety of a first lengthwise end surface of the battery cell except for the electrode lead when viewed from a first lengthwise end thereof.

When the shield member covers the first lengthwise end surface of the battery cell to the maximum extent, gas and flame discharged in forward direction from the battery cell may be prevented from exhausting toward the front portion of the battery cell to the maximum extent.

The present invention provides a structure of a battery module including the battery cell.

A plurality of battery cells may be stacked in widthwise direction to form a cell laminate, and the cell laminate may be accommodated in a housing to form a battery module.

A bus bar frame assembly electrically connecting the battery cells may be coupled to a first lengthwise end of the cell laminate. The bus bar frame assembly may include: a bus bar frame provided with a slit where the electrode lead is passed through; and a bus bar connected to the electrode lead passed through the slit.

The shield member may be fixed so as not to decoupled from the electrode lead by interfering with the bus bar at the first lengthwise end.

Since the shield member prevents the exhaust of gas and flame discharged from the battery cell in forward direction, thermal propagation toward other battery modules or external devices connected to the front portion of the battery module may be prevented.

In addition, since the shield member has a sidewall portion, thermal propagation between the battery cells constituting the cell laminate may also be prevented. Specifically, by the shield member, the gas and flame discharged through the terrace portion of one battery cell may be prevented from transmitting heat to another battery cell through the terrace portion thereof. As a result, the thermal runaway at the module level due to one specific ignited battery cell causing the ignition of entire battery cells may be prevented.

In addition to the battery module, the present invention provides a structure of a battery module comprising: a cell laminate comprising a plurality of cell banks stacked in widthwise direction, each cell bank comprising a plurality of pouch-type battery cells, each of the plurality of pouch-type battery cells comprising a pouch accommodating an electrode assembly and an electrode lead extending from the electrode assembly and protruding through a first lengthwise end of the pouch; and a shield member comprising a flame retardant material, the shield member provided at a first lengthwise end of each of the plurality of cell banks and comprising a through-hole where the electrode lead is passed through, wherein an inner circumferential surface of the through-hole corresponds to an outer circumferential surface of the electrode lead.

The battery module according to the present invention includes the shield member to prevent high-temperature gas and flame caused by ignition of the battery module from being discharged through the electrode lead toward the front portion of the battery module. Accordingly, heat may be prevented from being transmitted to other battery modules or external devices connected to the battery module. When a plurality of battery modules are integrated to form a battery pack, the ignition may be prevented from developing into thermal runaway at the pack level.

Here, the through-hole has an inner circumferential surface that completely surrounds the outer circumferential surface of the electrode lead such that the exhaust of gas and flame into the gap between the through-hole and the electrode lead may be minimized.

The gap between two shield members adjacent in widthwise direction may be 1 mm or less. Since the shield members adjacent in widthwise direction have a gap of 1 mm or less, the exhaust of high-temperature and high-pressure gas and flame in forward direction through the gap between the shield members may be delayed or prevented.

Preferably, at least one pair of the shield members adjacent to each other in the widthwise direction is in contact with each other. In such case, the leakage of gas and flame between the shield members may be completely blocked.

When the shield member includes a pair of sidewall portions extending from two widthwise ends thereof toward a second lengthwise end of the pouch, the sidewall portions of each of the at least one pair of the shield members adjacent to each other in the widthwise direction may be in contact with each other. As the sidewall portions are provided, the sealing between the shield members becomes stronger such that the exhaust of gas and flame in forward direction may be prevented, and the thermal propagation between the cells at the front portion of the cell laminate may also be prevented.

In addition, the sidewall portion forms a free space with an open upper portion between the shield member and the cell laminate while preventing the exhaust of gas and flame from the free space in widthwise direction. Accordingly, the thermal propagation between the cell banks may be prevented, and the thermal runaway at the module level may also be prevented.

Alternatively, the gap between the widthwise ends of at least one pair of shield members facing each other may be sealed. It is preferable that the sealing be achieved by a sealant including a heat-resistant material. The sealant may also include a compressible material so as to seal the gap between the outer circumferential surface of the electrode lead and the inner circumferential surface of the through-hole by compression. Alternatively, the sealant may include an adhesive such as a heat-resistant synthetic resin.

When the shield member includes a pair of sidewall portions extending from two widthwise ends thereof toward a second lengthwise end of the pouch, a barrier member in contact with at least one of the pair of sidewall portions may be interposed between at least two adjacent cell banks in the widthwise direction. Accordingly, the front and lateral portions of the cell banks may be isolated from each other by the barrier member and the shield member, and gas and flame discharged from each of the cell banks may be guided in an upward direction without being transmitted to each other through the front portion of the cell laminate.

The battery module may further include a pack frame accommodating the cell laminate, the pack frame including a pair of sidewalls extending from two widthwise ends of the cell laminate in the lengthwise direction. Here, at least one of the sidewall portions may be in contact with the pack frame. As the sidewall of the pack frame and the sidewall portion are in contact with each other, the discharge of gas and flame through the front portion of the cell laminate may be prevented from being exhausted out of the battery module in the widthwise direction.

The pouch may include, at the first lengthwise end thereof, a terrace portion which is thinner than other portions and from which the electrode lead protrudes, and a groove may be provided on the surface of the second lengthwise end of the shield member to accommodate the terrace portion. Here, the through-hole may be provided at the innermost portion of the groove with respect to the lengthwise direction. The groove may add structural stability to the bond between the shield member and the cell laminate, and may secure more free space between the first lengthwise end of the terrace portion and the shield member to guide the discharge of gas and flame upward.

The groove may have a guide surface having a width narrowing toward the through-hole. Accordingly, the electrode lead may be easily inserted into the through-hole, thereby improving the convenience of assembly.

The shield member may include a mica material. However, the material of the shield member is not limited thereto, and it is sufficient as long as the shield member has appropriate rigidity and heat resistance to maintain the structure thereof under high-temperature and high pressure. When the shield member includes a mica material, the shield member is advantageous in that the insulation of the front portion of the cell laminate is maintained even when the bus bar frame is melted.

The present invention also provides structures of a battery pack including the battery module and a vehicle including the battery pack.

A plurality of battery modules may be integrated into a battery pack to increase the capacity and/or voltage thereof. The battery pack may include an exhaust device capable of discharging gases and flames emitted in an upward direction to the outside when the battery module ignites. The battery pack may be built into a vehicle as a power source. The vehicle may include an electric vehicle, a hybrid vehicle, etc.

### [ADVANTAGEOUS EFFECTS]

The present invention provides a structure of a battery module in which the discharge of high-temperature gas and flame generated during ignition is guided in upward direction by a shield member, thereby preventing thermal propagation between battery cells and a battery module and thermal runaway caused by the same.

The present invention also provides a structure of a battery module in which the discharge of gas and flame may be guided upward by providing a shield member capable of preventing high-temperature gas and flame discharged from a battery cell to a terrace portion from being discharged in forward direction.

The present invention is also advantageous in that the structure of a battery module delays or prevents the thermal runaway at the module level by blocking thermal propagation between cells through the front space of a cell laminate with the sidewall portion of the shield member along with the barrier member.

The present invention is also advantageous in that the structure of a battery module is provided wherein a shield member capable of preventing the discharge of gas and flame in forward direction maintains and fixes the structure despite high-temperature gas and flame.

In addition, the present invention may have various other effects, and the descriptions thereof will be given in each embodiment, or the description of the effects that may be easily inferred by a person skilled in the art will be omitted.

### [BRIEF DESCRIPTION OF DRAWINGS]

FIG. 1 illustrates a structure of a pouch-type battery cell.
FIG. 2 illustrates the constitution of a cell laminate.
FIGS. 3 and 4 illustrate the structure of a general battery module.
FIG. 5 illustrates a structure of a battery module according to an embodiment of the present invention.
FIG. 6 illustrates a structure of a shield member according to an embodiment of the present invention.
FIGS. 7 and 8 illustrate an insertion of an electrode lead into a shield member having a groove according to the present invention.
FIG. 9 illustrates a shield member mounted on a cell laminate according to an embodiment of the present invention.
FIG. 10 illustrates a cross-section of FIG. 9.
FIG. 11 illustrates a battery module with a top plate thereof removed according to an embodiment of the present invention.
FIGS. 12 and 13 illustrate cross-sections of a battery module according to an embodiment of the present invention.
FIG. 14 is an enlarged view of a main part of FIG. 13.

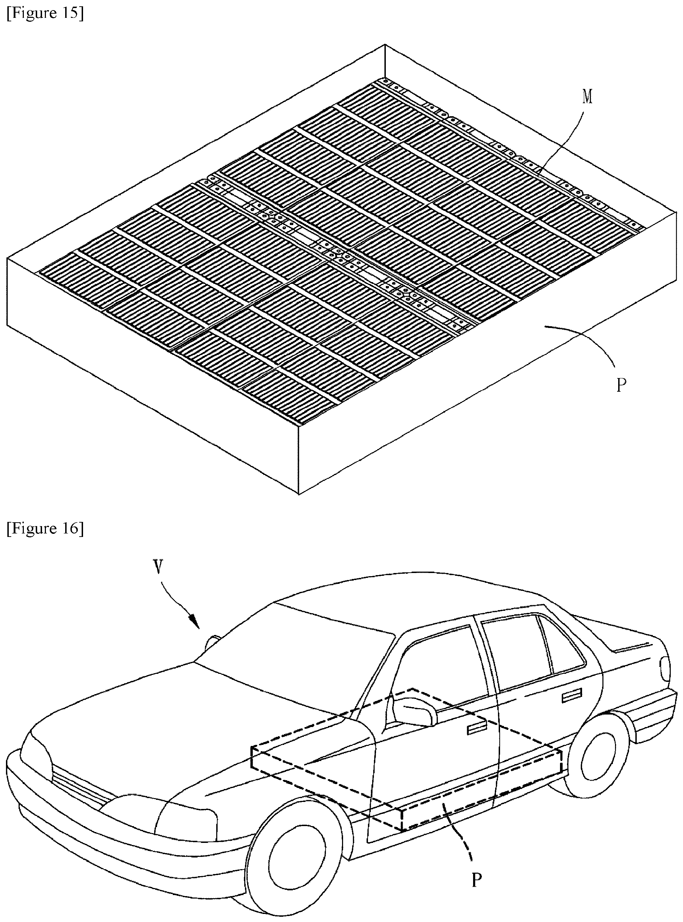

FIGS. 15 and 16 illustrate a structure of a battery pack accommodating a battery module according to an embodiment of the present invention and a vehicle with the battery pack, built therein, respectively.

### [DESCRIPTION OF REFERENCE NUMERALS]

1: cell laminate
   10: cell bank
   100: battery cell
      101: electrode assembly
      102: pouch
      103: sealed portion
      104: terrace portion
      105: electrode lead
   110: barrier member
2: bus bar frame assembly
   20: bus bar frame
      200: slit
   21: bus bar
3: shield member
   30: main body
      300: through-hole
      301: groove
      302: guide surface
   31: sidewall portion
4: housing
   40: pack frame
   41: end plate
   42: top plate
      420: exhaust hole
M: battery module
P: battery pack
V: vehicle

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

Herein, the direction the first lengthwise end of the cell laminate provided with the bus bar frame assembly is facing is referred to as the forward direction for convenience of description.

Hereinafter, a preferred embodiment of the present invention will be described with reference to the accompanying drawings.

### [STRUCTURES OF POUCH-TYPE BATTERY CELL AND CELL LAMINATE]

Hereinafter, with reference to FIGS. 1 and 2, a structure of a pouch-type battery cell according to an embodiment of the present invention and a structure of a cell laminate in which the battery cells are laminated will be described in detail.

FIG. 1 illustrates a structure of a pouch-type battery cell. Referring to FIG. 1, a battery cell 100 according to an embodiment of the present invention may include an electrode assembly 100 and a pouch 102 that is sealed to accommodate the electrode assembly 100.

The pouch 102 surrounds the electrode assembly 100 by folding and sealing a sheet in half and is sealed at a sealed portion 103 on one heightwise end thereof and a terrace portion 104 at two lengthwise ends thereof. The sealing may be achieved by fusion, melting by high-temperature heat. Therefore, when the battery cell 100 ignites due to a short circuit, etc, it is highly probable that high-temperature gas and flame are discharged from the pouch 102 through the sealed portion 103 and/or the terrace portion 104.

An electrode lead 105 extending from the electrode assembly 100 protrudes from the pouch 102 through the terrace portion 104. The electrode lead 105 may electrically connect the electrode assembly 100 to the outside.

FIG. 2 illustrates the constitution of a cell laminate. Referring to FIG. 2, a plurality of battery cells 100 may be laminated in a widthwise direction to form a cell laminate 1.

The cell laminate 1 may include a barrier member 110 interposed between the battery cells 100 to block thermal propagation. The barrier member 110 preferably includes a heat-resistant material so as to withstand high-temperatures, and preferably includes a compressible material so as to absorb swelling and assembly tolerance of the battery cell 100.

One or more battery cells 100 may integrated to form a plurality of cell banks 10 isolated by the barrier member 110.

### [GENERAL STRUCTURE OF BATTERY MODULE]

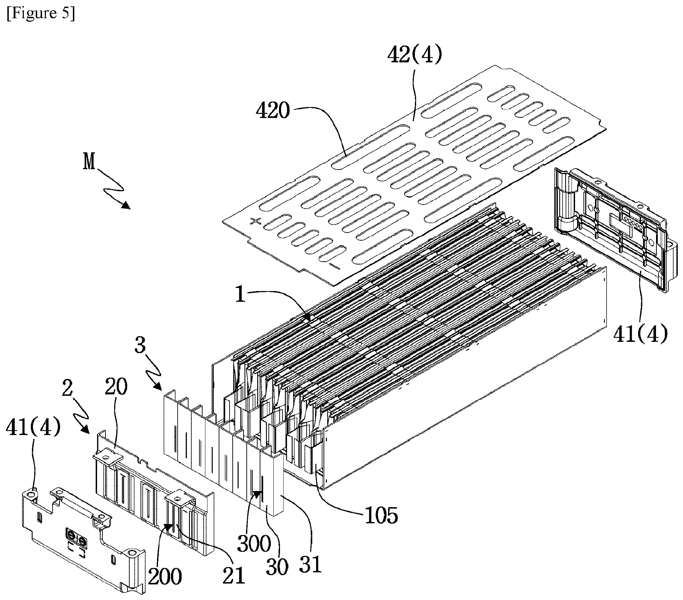

Hereinafter, with reference to FIG. 5, a general structure of a battery module according to an embodiment of the present invention will be described in detail.

FIG. 5 illustrates a structure of a battery module according to an embodiment of the present invention. Referring to FIG. 5, the cell laminate 1 may be accommodated in a housing 4 to form a battery module M.

A shield member 3 and a bus bar frame assembly 2 may be coupled at the first lengthwise end of the cell laminate 1. A plurality of shield members 3 may be provided for one or more battery cells 100 and/or cell banks 10, respectively.

The shield member 3 and the bus bar frame assembly 2 may be arranged at the first lengthwise end, or at the first lengthwise end. However, according to the embodiment of the present invention, the shield member 3 and the bus bar frame assembly 2 may be arranged at the first lengthwise end.

The bus bar frame assembly 2 may include a pair of terminals protruding from the housing 4 for electrically connecting the electrode leads 105 to each other and electrically connecting the entire cell laminate 1 to the outside.

The bus bar frame assembly 2 may include a bus bar frame 20 which is a main body, a slit 200 where the electrode leads 105 is passed through, and a bus bar 21 to which the electrode leads 105 passed through the slit 200 is connected.

The bus bar frame 20 may include a synthetic resin material due to reasons such as conformity with the housing 4 and insulating properties.

The connection between the electrode lead 105 and the bus bar 21 may be achieved by welding so as to firmly fix the first lengthwise end of the electrode lead 105 to the bus bar 21. Accordingly, the bus bar frame 20 and the shield member 3 may also be fixed by the bus bar 21 in front of the bus bar frame 20 and the shield member 3 with the electrode lead 105 inserted thereinto. In particular, the shield member 3 may still be fixed so as not to be detached by the bus bar 21 even when the bus bar frame 20 is melted.

The housing 4 may include: a pack frame 40 having a bottom surface and a pair of sidewalls and accommodating the cell laminate 1; a pair of end plates 41 covering the front and rear portions of the cell laminate 1, and a top plate 42 covering the upper portion of the cell laminate 1.

An exhaust hole 420 may be provided in the top plate 42 to discharge gas and flame generated from the cell laminate 1 in an upward direction. It is preferable that a plurality of the exhaust holes 420 be provided for the structural rigidity of the top plate 42 and smooth discharge of gas.

### [SHAPE OF THE SHIELD MEMBER AND INSERTION STRUCTURE OF ELECTRODE LEAD]

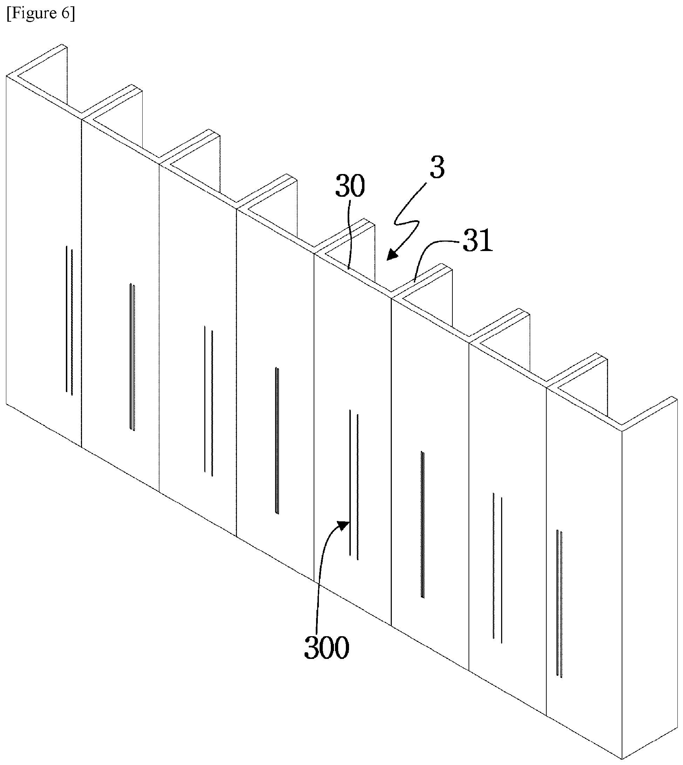

Hereinafter, with reference to FIGS. 6 to 8, a shape of a shield member and an insertion structure of an electrode lead and the shield member according to an embodiment of the present invention will be described in detail.

FIG. 6 illustrates a structure of a shield member according to an embodiment of the present invention. Referring to FIG. 6, the shield member 3 may include a main body 30 provided with a through-hole 300.

The through-hole 300 may have a predetermined inner circumferential surface cross-section of which in lengthwise direction is a closed curve. Here, the inner circumferential surface of the through-hole 300 may have the same dimension as the outer circumferential surface of the electrode lead 105.

The shield member 3 may also include a sidewall portion 31 extending from two widthwise ends of the main body 30 to the second lengthwise end. The sidewall portion 31 may form a free space with an open upper portion between the shield member 3 and the battery cell 100, and may prevent the exhaust of gas and flame from the free space to the two widthwise ends. In addition, since the sidewall portion 31 is provided, thermal propagation between the cell banks 10 through the front space of the cell laminate 1 is prevented such that thermal runaway in the entire battery module M caused by the ignition of a certain cell bank 10 may be prevented.

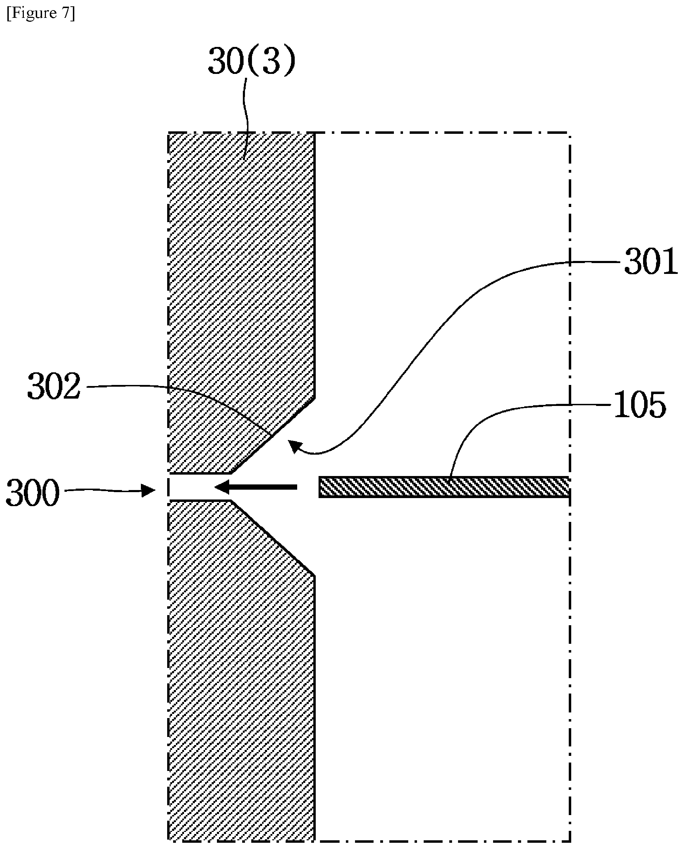

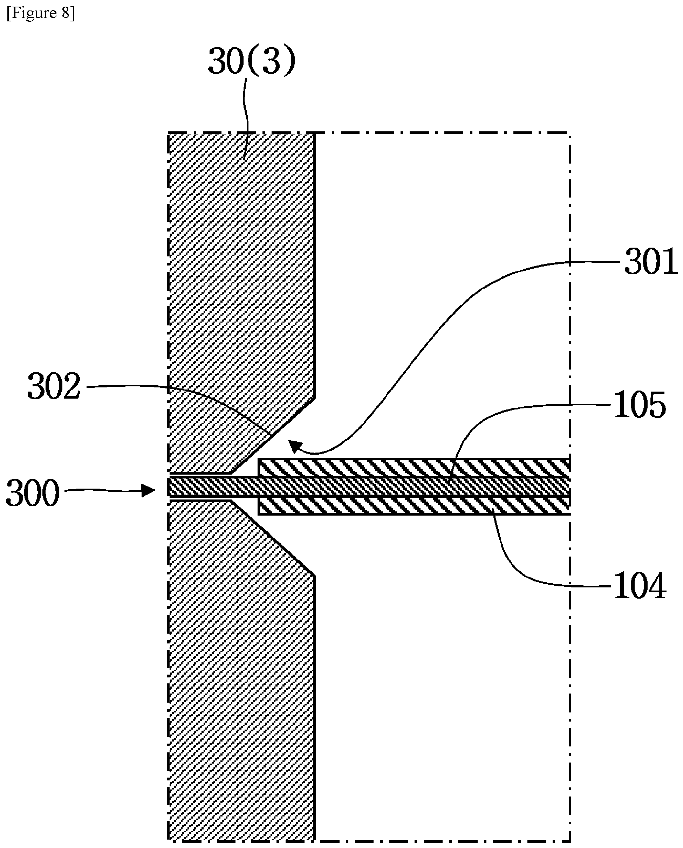

FIGS. 7 and 8 illustrate an insertion of an electrode lead into a shield member having a groove according to the present invention. Referring to FIGS. 7 and 8, a groove 301 for accommodating the terrace portion 104 may be provided on the second lengthwise end surface of the shield member 3. Here, the through-hole 300 may be provided at the innermost end of the groove 301. The groove 301 forms a free space around the terrace portion 104 such that the gas and flame discharged through the terrace portion 104 may be guided in backward direction or in upward direction.

The groove 301 may have a guide surface 302 having a narrowing width toward lengthwise inner side. Accordingly, the insertion of the electrode lead 105 into the through-hole 300 is facilitated such that the convenience of assembly may be improved.

The shield member 3 may include a heat-resistant material. In addition, the shield member 3 may include an insulating material. For example, the shield member 3 may include a mica material. When the shield member 3 includes a heat-resistant material, the shield member 3 is not deformed even under a thermal runaway, and the exhaust of gas and flame in forward direction from the cell laminate 1 may be prevented. When the shield member 3 has an insulating property, even after the bus bar frame 20 is melted, the front portion of the cell laminate 1 may be insulated by the shield member 3.

### [STRUCTURE OF SHIELD MEMBER FOR PREVENTING EXHAUST IN FORWARD DIRECTION]

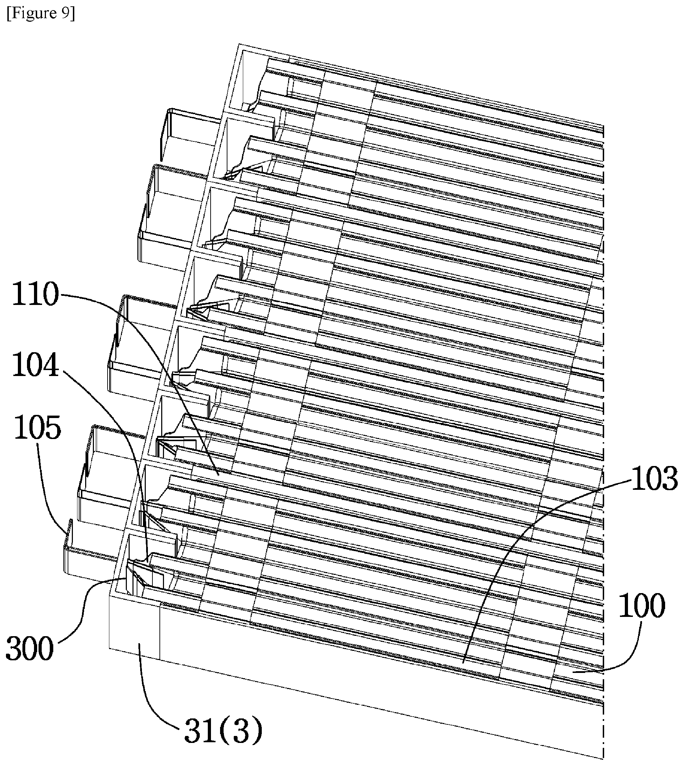

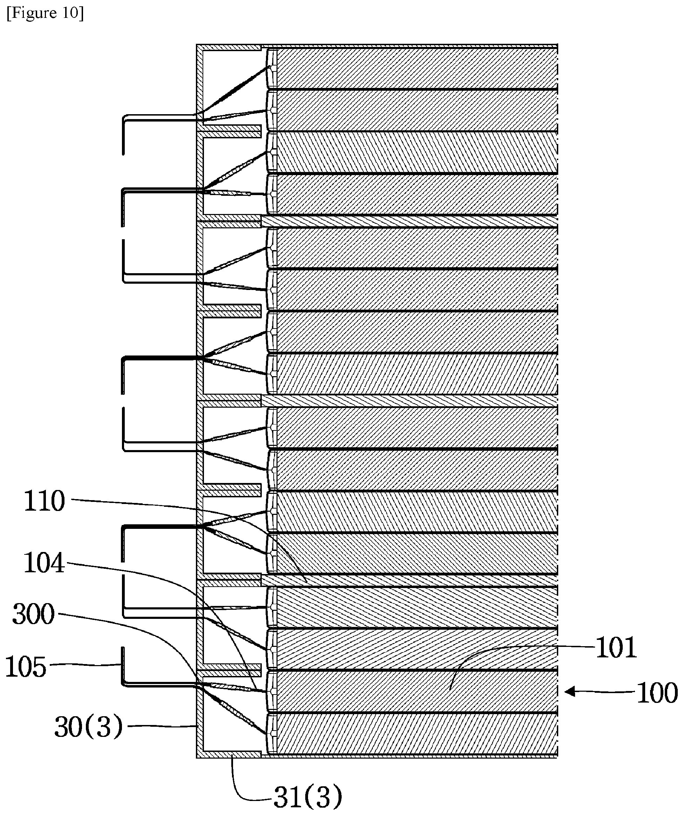

Hereinafter, with reference to FIGS. 9 and 10, a structure of a shield member for preventing exhaust in a cell laminate occurring in forward direction according to an embodiment of the present invention will be described in detail.

FIG. 9 illustrates a shield member mounted on a cell laminate according to an embodiment of the present invention, and FIG. 10 illustrates a cross-section of FIG. 9. Referring to FIGS. 9 and 10, since the dimension of the inner circumferential surface of the through-hole 300 is the same as that of the outer circumferential surface of the electrode lead 105, gas and flame discharged in forward direction from the battery cell 100 may be prevented from being exhausted in forward direction while the electrode lead 105 is inserted in the shield member 3.

Specifically, the through-hole 300 and the electrode lead 105 may have the same widths and/or heights. Preferably, the gap between the inner circumferential surface of the through-hole 300 and the electrode lead 105 is 1 mm or less in all directions. More preferably, the inner circumferential surface of the through-hole 300 and the outer circumferential surface of the electrode lead 105 are in contact with each other.

Alternatively, the gap between the inner circumferential surface of the through-hole 300 and the outer circumferential surface of the electrode lead 105 may be sealed by a sealant (not shown). It is preferable that the sealant be heat-resistant. Various sealants such as a compressible sealant or an adhesive may be used.

Since the gap between the inner circumferential surface of the through-hole 300 and the outer circumferential surface of the electrode lead 105 is less than a predetermined value or is completely sealed, the leakage of gas and flame through the gap between the through-hole 300 and the electrode lead 105 may be delayed or prevented.

The gap in the widthwise direction between at least one pair of the shield members 3 adjacent to each other in the widthwise direction may be 1 mm or less. Preferably, at least one pair of the shield members 3 adjacent to each other in the widthwise direction is in contact with each other.

When the shield member 3 includes a pair of sidewall portions 31 extending from the two widthwise ends thereof toward the second lengthwise end, the sidewall portions 31 of each of the at least one pair of the shield members 3 adjacent to each other in the widthwise direction may be in contact with each other.

The gap between the widthwise ends of the at least one pair of the shield members 3 adjacent to each other in the widthwise direction may be sealed by a sealant (not shown). It is preferable that the sealant be heat-resistant. Various sealants such as a compressible sealant or an adhesive may be used.

Since the gap between the shield members 3 is less than a predetermined value or is completely sealed, the leakage of gas and flame through the gap between the shield members 3 may be delayed or prevented.

The first lengthwise end of the pouch 102 may be spaced apart from the shield member 3 by a predetermined distance toward the second lengthwise end. That is, the terrace portion 104 may not pass through the shield member 3. Accordingly, gas and flame discharged in forward direction from the cell laminate 1 through the terrace portion 104 may not be exhausted to the front portion of the shield member 3.

The width, upper end portion and/or lower end portion of the shield member 3 may extend to about or farther than the first lengthwise end surface of the cell laminate 1 to cover the same. Preferably, the shield member 3 covers the entire first lengthwise end surface of the cell laminate 1 except for the electrode lead 105 when viewed from the first lengthwise end.

Since the shield member 3 covers the first lengthwise end surface of the cell laminate 1 excluding the electrode lead 105 to the maximum extent, exhaust of gas and flame in forward direction discharged from the cell laminate 1 may be prevented to the maximum extent.

### [STRUCTURE OF SHIELD MEMBER FOR PREVENTING EXHAUST IN LATERAL DIRECTION]

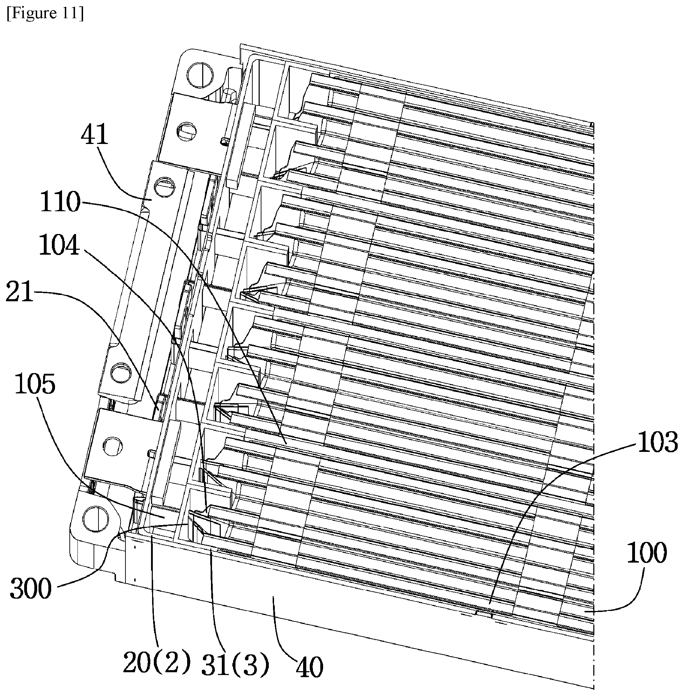

Hereinafter, with reference to FIGS. 11 to 13, a structure of a shield member for preventing thermal propagation between cell banks according to an embodiment of the present invention will be described in detail.

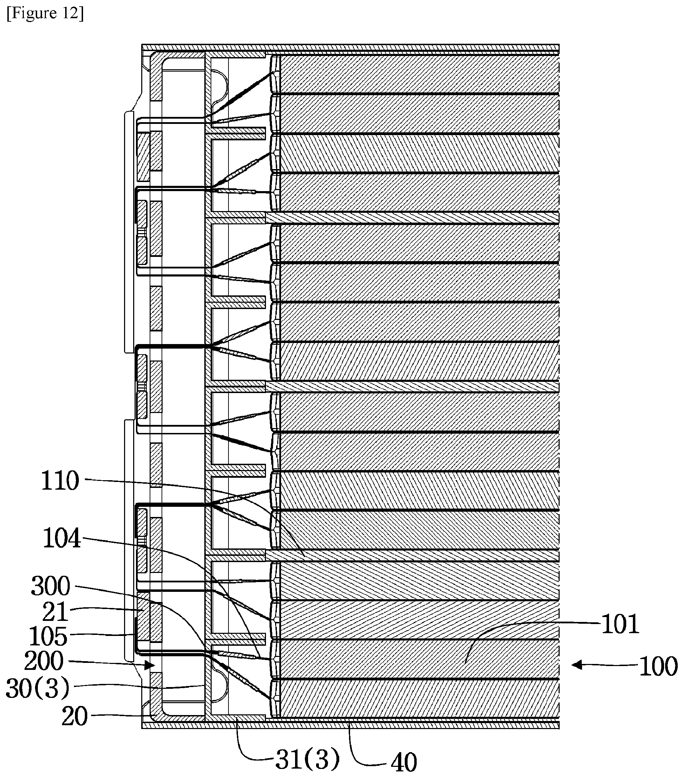

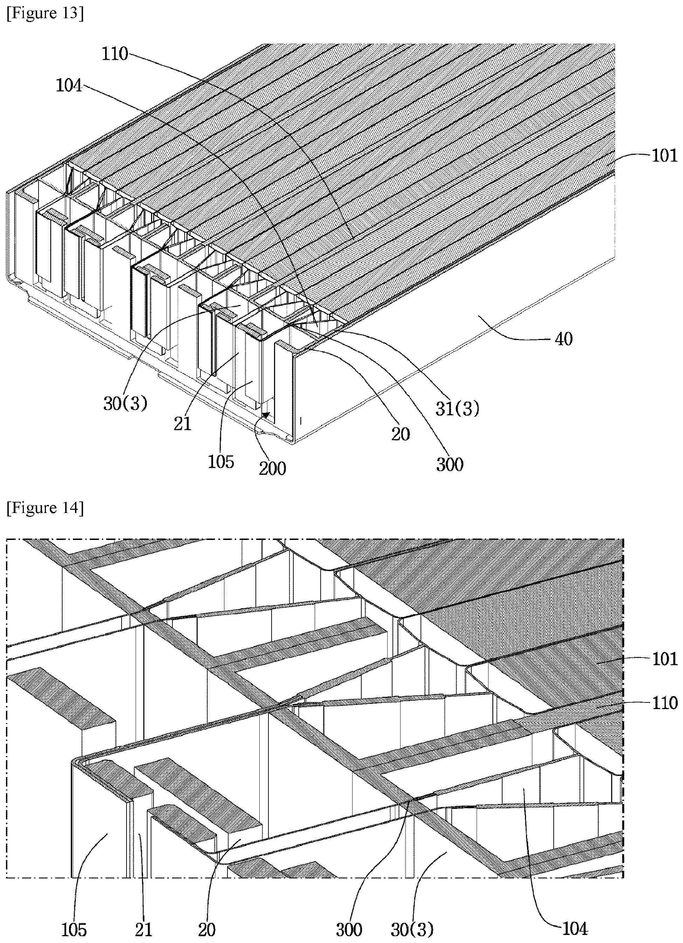

FIG. 11 illustrates a battery module with a top plate thereof removed according to an embodiment of the present invention, and FIGS. 12 and 13 illustrate cross-sections of a battery module according to an embodiment of the present invention. Referring to FIGS. 11 to 13, since the shield member 3 has the sidewall portion 31, thermal runaway at the module level caused by the transmission of gas and flame from the cell bank 10 to other cell banks through the front space of the cell laminate 1 may be prevented.

Here, a barrier member 110 may be interposed between a pair of cell banks 10 adjacent to each other in the widthwise direction. It is preferable that the barrier member 110 be in contact with at least one of the sidewall portions 31. As the barrier member 110 is provided, the lateral and front portions of the cell bank 10 may be isolated from other cell banks, and gas and flame generated from the cell bank 10 may be discharged in the upward direction without being transmitted to other cell banks. As a result, thermal runaway caused by an ignition of one of the cell banks 10 is prevented from spreading to the entire battery module M.

In addition, the gap between at least one of the sidewall portions 31 and the sidewall of the pack frame 40 may be sufficiently small. Preferably, the gap is 1 mm or less. More preferably, the sidewall portion 31 is in contact with the sidewall of the pack frame 40. Accordingly, the gas and flame discharged through the front portion of the cell laminate 1 may be prevented from being exhausted out of the battery module M in the widthwise direction.

### [STRUCTURE OF SHIELD MEMBER FOR GUIDING EXHAUST IN UPWARD DIRECTION]

Hereinafter, referring again to FIGS. 11 to 13, a structure of a shield member for guiding exhaust in a cell laminate in upward direction according to an embodiment of the present invention will be described in detail.

Referring back to FIGS. 11 to 13, as described above, the shield member 3 may be located before the terrace portion 104, and the gap between the through-hole 300 and the electrode lead 105 is sufficiently small such that the exhaust of gas and flame in forward direction from the free space formed between the shield member 3 and the cell bank 10 is prevented. In addition, the sidewall portion 31, the barrier member 110 and the sidewall of the pack frame 40 prevent the lateral exahust of gas and flame from the free space, gas and flame discharged in forward direction from the cell bank 10 may be guided to be exhausted in upward direction as the bottom portion of the pack frame 40 is located under the sidewall portion 31.

In particular, since the shield member 3 is heat-resistant, the structure of the shield member 3 may be maintained to prevent the exhaust of gas and flame even when the bus bar frame 20 is melted by high-temperature heat, and may also insulate the front portion of the cell laminate 1. Here, the shield member 3 may be fixed by the bus bar 21 connected to the electrode lead 105 before the shield member 3 and by the terrace portion 104 behind the shield member 3 to prevent separation in forward and reverse directions.

### [STRUCTURES OF BATTERY PACK AND VEHICLE]

Hereinafter, with reference to FIGS. 17 and 18, the structure of a battery pack accommodating a battery module according to an embodiment of the present invention and a vehicle incorporating the same will be described.

FIGS. 17 and 18 illustrate a structure of a battery pack accommodating a battery module according to an embodiment of the present invention and a vehicle with the battery pack, built therein, respectively. Referring to FIGS. 17 and 18, a plurality of battery modules M may be integrated to form a battery pack P for increasing the capacity and/or voltage. The battery pack P may include an exhaust device capable of discharging in upward direction gas and flame from an ignited battery module M. The battery pack P may be built into a vehicle V as a power source. The vehicle V may include an electric vehicle, a hybrid vehicle, etc.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery cell comprising:
a pouch accommodating an electrode assembly;
an electrode lead extending from the electrode assembly and protruding through a first lengthwise end of the pouch;
a housing accommodating the cell laminate and having an exhaust hole at an upper portion thereof; and
a shield member comprising a flame retardant material, the shield member provided at the first lengthwise end of the pouch and comprising a through-hole where the electrode lead is passed through,
wherein an inner circumferential surface of the through-hole corresponds to an outer circumferential surface of the electrode lead.

2. The battery cell of claim 1, wherein the electrode lead and the through-hole have a same height.

3. The battery cell of claim 1, wherein the electrode lead and the through-hole have a same width.

4. The battery cell of claim 1, wherein the outer circumferential surface of the electrode lead and the inner circumferential surface of the through-hole are in contact with each other.

5. The battery cell of claim 1, wherein a gap between the outer circumferential surface of the electrode lead and the inner circumferential surface of the through-hole is sealed.

6. The battery cell of claim 1, wherein a gap between the outer circumferential surface of the electrode lead and the inner circumferential surface of the through-hole is 1 mm or less in all directions.

7. The battery cell of claim 1, wherein the first lengthwise end of the pouch is spaced apart from the shield member by a predetermined distance.

8. The battery cell of claim 1, wherein the shield member comprises a pair of sidewall portions extending from two widthwise ends thereof toward a second lengthwise end of the pouch.

9. The battery cell of claim 1, wherein a width of the shield member is equal to or greater than that of the battery cell.

10. The battery cell of claim 1, wherein a lower end portion of the shield member is positioned at a same height as or positioned lower than a lower end portion of a first lengthwise end surface of the battery cell.

11. The battery cell of claim 1, wherein an upper end portion of the shield member is positioned at a same height as or positioned higher than an upper end portion of a first lengthwise end surface of the battery cell.

12. The battery cell of claim 1, wherein the shield member covers an entirety of a first lengthwise end surface of the battery cell except for the electrode lead when viewed from a first lengthwise end thereof.

13. A battery module comprising any one of battery cells of claims 1 to 12.

14. A battery module comprising:
a cell laminate comprising a plurality of cell banks stacked in widthwise direction, each cell bank comprising a plurality of pouch-type battery cells, each of the plurality of pouch-type battery cells comprising a pouch accommodating an electrode assembly and an electrode lead extending from the electrode assembly and protruding through a first lengthwise end of the pouch;
a housing accommodating the cell laminate and having an exhaust hole at an upper portion thereof; and
a shield member comprising a flame retardant material, the shield member provided at a first lengthwise end of each of the plurality of cell banks and comprising a through-hole where the electrode lead is passed through,
wherein an inner circumferential surface of the through-hole corresponds to an outer circumferential surface of the electrode lead.

15. The battery module of claim 14, wherein a gap in widthwise direction between two adjacent shield members in widthwise direction is 1 mm or less.

16. The battery module of claim 15, wherein a gap between widthwise ends of at least one pair of shield members facing each other are sealed.

17. The battery module of claim 14, wherein the shield member comprises a pair of sidewall portions extending from two widthwise ends thereof toward a second lengthwise end of the pouch, and
two sidewall portions of two adjacent shield members in widthwise direction are in contact with each other.

18. The battery module of claim 14, wherein the shield member comprises a pair of sidewall portions extending from two widthwise ends thereof toward a second lengthwise end of the pouch, and
a barrier member in contact with at least one of the pair of sidewall portions is interposed between at least two adjacent cell banks in the widthwise direction.

19. The battery module of claim 14, further comprising: a pack frame accommodating the cell laminate, the pack frame comprising a pair of sidewalls extending from two widthwise ends of the cell laminate in the lengthwise direction,
wherein the shield member comprises a pair of sidewall portions extending from two widthwise ends thereof toward a second lengthwise end of the pouch, and
at least one of the pair of sidewall portions is in contact with the pack frame.

20. A battery pack comprising a battery module of any one of claims 14 to 19.

21. A vehicle comprising a battery pack of claim 20.
